# EUROPEAN PATENT APPLICATION

(11) **EP 2 735 896 A1**
(43) Date of publication of application: **28.05.2014**
(21) Application number: 12194060.5
(22) Date of filing: 23.11.2012
(51) Int. Cl.: G02B 6/26

(54) **A method of interrogating a multiple number of optic sensors, a computer program product and an interrogating unit**

(71) Applicant: Nederlandse Organisatie voor Toegepast -Natuurwetenschappelijk Onderzoek TNO, 2628 VK Delft (NL)
(72) Inventor: Cheng, Lun-Kai, 2628 VK Delft (NL); Toet, Peter Martijn, 2628 VK Delft (NL)
(74) Representative: Jansen, Cornelis Marinus

(57) **Abstract**

The invention relates to a method of interrogating a multiple number of optic sensors. The method comprises the steps of providing a multiple number of optic sensors included in a single optic path and having spectrally separated resonance spectra, and providing a single interrogation unit coupled to the single optic paths. Further, the method comprises the steps of selecting a limited number of interrogation wavelengths for each optic sensor and programming a programmable laser source, included in the single interrogation unit, in a sequence of the selected interrogation wavelengths. In addition, the method comprises the steps of interrogating the optic sensors by operating the laser source in the sequence of the selected interrogation wavelengths, and performing measurements on the programmable laser source output for correcting the interrogating step.

## Description

The invention relates to a method of interrogating a multiple number of optic sensors, comprising the steps of providing a multiple number of optic sensors included in a single optic path and having spectrally separated resonance spectra, and providing a single interrogation unit coupled to the single optic path.

Multiple optic sensors can be used for detecting various physical parameters that influence the optical properties of the sensors. The basic principle of the measurement is that a resonance spectrum of the sensor shifts when an external physical parameter changes. A commonly used fiber optic sensor is a Fiber Bragg Grating (FBG) type sensor. Upon deformation of the sensor, a resonance peak wavelength shifts, enabling an indirect measurement of the physical parameter causing the sensor deformation, e.g. temperature or mechanical stress.

In a measurement set-up where the sensors are included in a single optic path, the sensors can in principle advantageously be interrogated using a single interrogation unit. The resolution and speed (bandwidth) of such interrogators determine the accuracy and speed of the measurement of the physical parameter.

In a first class of known interrogators the shape of the spectra of a number of sensor are measured with either a spectrometer with a detector array or a tunable swept laser source. For the tunable swept laser source interrogator the interrogation signal generated by the tunable swept laser source is swept through the spectrum of the multiple sensors to scan and to profile the spectra of the corresponding sensors. Due to the scanning principle, the first class of interrogators is inherently slow, especially if a dense wavelength sampling scheme is performed to determine the spectral curves of the sensors. Further, measurement results are relatively moderate since firstly, programmable laser sources typically suffer from wavelength instability and/or intensity instability, secondly the results depend also the mathematical scheme to calculate the wavelength of the spectrum.

In a second class of known interrogators, the resonance spectrum of the sensor is measured using a laser source producing an interrogation signal having both a stable intensity and a stable central frequency. The intensity of a response signal generated by the sensor is a measure for a shift in the resonance spectrum. Then, for each sensor a corresponding laser source meeting the above-mentioned stability criteria, is required, making the measurement system complex and expensive. Further, due to the fixed operating wavelength of the laser source, only small shifts in the resonance spectrum of the sensor can be measured.

Apparently, there is trade-off between the number of sensors, the accuracy and the speed of known interrogators.

It is an object of the invention to provide a method of interrogating a multiple number of optic sensors according to the preamble, wherein the above-mentioned disadvantages are reduced. In particular, the invention aims at obtaining a method of interrogating a multiple number of optic sensors according to the preamble that is both accurate and fast. Thereto, according to an aspect of the invention, the method further includes the steps of selecting a limited number of interrogation wavelengths for each optic sensor, programming a programmable laser source, included in the single interrogation unit, in a sequence of the selected interrogation wavelengths, interrogating the optic sensors by operating the laser source in the sequence of the selected interrogation wavelengths, and performing measurements on the programmable laser source output for correcting the interrogating step.

By selecting only a limited number of interrogation wavelengths for each optic sensor, the respective spectra of the optic sensors can be analyzed relatively quickly, e.g. due to the lack of complex mathematical calculations. Further, the step of performing measurements on the programmable laser source renders the measurements in terms of intensity and wavelength accurate. Further, a relatively simple design of the interrogating unit can be obtained.

The invention is at least partly based on the insight that a reduced number of interrogations may provide enough information to deduct details of the sensor spectral characteristic since the shape of the spectral curve can be measured in advance, before the actual interrogation process starts. According to an aspect of the invention, the insight that the curve merely shifts in the wavelength domain, is efficiently exploited. Since the retrieval of redundant information is considerably reduced, the relevant information of the sensor can still be deducted while the interrogation process is shortened considerably.

The invention also relates to a computer program product. A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet, e.g. as an app.

Further, the invention relates to an interrogation unit.

Other advantageous embodiments according to the invention are described in the following claims.

By way of example only, embodiments of the present invention will now be described with reference to the accompanying figures in which
Fig. 1 shows a schematic view of a fiber including a multiple number of optic sensors, and an interrogation system for interrogating the sensors;
Fig. 2 shows a schematic view of an interrogation unit according to the invention;
Fig. 3 shows a spectral diagram, and
Fig. 4 shows a flow chart of an embodiment of a method according to the invention.

The figures are merely schematic views of a preferred embodiment according to the invention. In the figures, the same reference numbers refer to equal or corresponding parts.

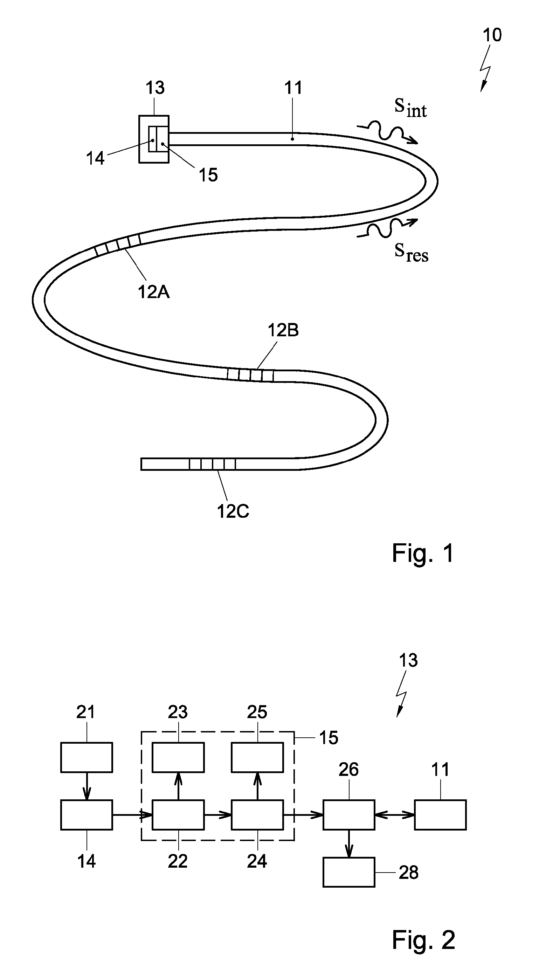

Figure 1 shows a schematic view of a fiber 11 including a multiple number of optic sensors 12A-C, and an interrogation unit 13 for interrogating the sensors 12. The fiber 11 and the interrogating unit 13 form a measurement system 10 for performing local measurements, e.g. multiple temperature measurements.

Each of the optic sensors 12 have an internal optical structure, e.g. a grating or another optical feature, generating a specific optical response signal when an optical interrogation signal Sᵢₙₜ is sent to the sensor 12.

The optic sensors 12 have been implemented as Fiber Bragg Gratings (FBG). Alternatively, the optic sensors 12 can be implemented as other sensor types, e.g. as ring resonators and/or Fabry Perot filters. In the description, the optic sensors 12 are also referred to as fiber optic sensors. The FBG sensors 12 are specifically responsive for optical signals within a certain optical bandwidth. The FBG sensors generate a spectral response having a resonance peak that can be modeled as a Gaussian curve. The optic sensors 12 are chosen such that the resonance are separated in wavelength domain, and they will not overlap after a given wavelength shift due to any physical perturbations. Individual optic sensors can be interrogated using an interrogation signal Sᵢₙₜ having a narrow spectral peak that is active only within the resonance spectrum of the individual optic sensor. The other sensors will then not respond since the interrogation signal is outside their resonance spectrum. In this way, single sensor measurements can be performed even though the optic sensors belong to the single optic path defined by the fiber 11.

The interrogation unit 13 includes a programmable laser source 14 operable in a wavelength range covering the spectra of the optic sensors 12. As an example, the programmable laser source 14 can be implemented as a Sample Grating Distributed Bragg Reflector (SG-DBR) laser. Further, the interrogation unit 13 includes a controlling device for controlling the programmable laser source 14. The interrogation unit 13 also includes a receiving device for detecting response signals Sᵣₑₛ from the optic sensors 12, and a correction unit 15 for performing measurements on the output of the programmable laser source 14 to make corrections in the interrogation process. Based upon the laser output measurements, a response signal can correctly be related to the interrogation signal.

According to an aspect of the invention, a limited number of interrogation wavelengths lambdaₘₑₐₛ (λₘₑₐₛ) are selected for each optic sensor 12. Then, a sequence of the selected interrogation wavelengths lambdaₘₑₐₛ is formed for subsequently interrogating the individual fiber optic sensors 12. The controlling device programs the programmable laser source 14 to generate optical signals, as interrogation signals Sᵢₙₜ, according to the sequence of the selected interrogation wavelengths lambdaₘₑₐₛ. The response signals Sᵣₑₛ detected by the receiving device are used to determine whether a resonance spectrum of an individual sensor 12 has shifted, as explained in more detail below.

Figure 2 shows a schematic view of a specific embodiment of an interrogation unit 13 according to the invention. The unit 13 includes a programmable laser source 14 and a controlling device 21 for controlling the laser source 14 such that interrogation signals Sᵢₙₜ are generated in a time-multiplexed manner having the selected interrogation wavelengths lambdaₘₑₐₛ. The unit 13 also includes a correction unit 15 provided with a wavelength tracking device 23 and an intensity tracking device 25 tracking the actual wavelength and intensity of an interrogation signal Sᵢₙₜ generated by the programmable laser source 14. The wavelength tracking device 23 includes e.g. a 3x3 interferometer with a proper optical path difference (OPD) matching for determining the interrogation wavelengths □ₘₑₐₛ of the laser source 14. Further, the intensity tracking device 25 may include a photodiode or another optical detection device for measuring a signal that is representative for the optical intensity of the interrogation signal Sᵢₙₜ. The correction unit 15 further includes optical splitter devices 22 and 24 connected in series to both forward the signal generated by the laser source to the fiber 11 and branch off said signal to the tracking devices 23, 25. The optical splitter devices 22 and 24 can also be combined in a single device. The unit 13 further includes an optical splitter 26 arranged between the output of the optical splitter devices 22, 24 on the one hand and the fiber 11 on the other hand to direct a sensor response signal Sᵣₑₛ towards a receiving device 28 included in the unit 13.

By monitoring variations in the wavelength and intensity of the interrogation signal, instability of the programmable laser source 14 can be tracked and compensated. Advantageously, the application of potentially instable lasers, either in terms of wavelength and/or intensity, leads to accurate optical measurements. In this process, the response signal can be compensated or corrected for measured fluctuations in the intensity and/or wavelength from the laser source instead of from the sensor itself..

Without the correction of wavelength and intensity variations of the the programmable laser the accuracy of the interrogator is determined by the stability of the wavelength and the intensity of the programmable laser. If a programmable laser source 14 having a stable wavelength or stable intensity, the wavelength tracking device 23 or the intensity tracking device 25, respectively, can be omitted.

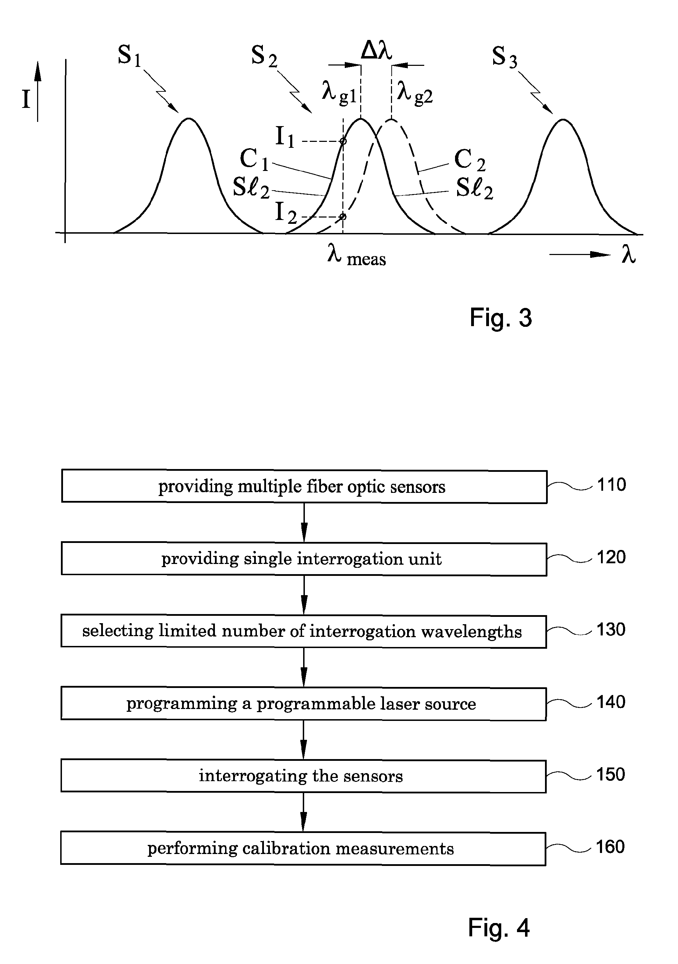

Figure 3 shows a example of a spectral diagram I as a function of wavelength (λ). Here, the resonance spectra S₁, S₂, S₃ of three FBG's are shown. Each of the spectra S₁, S₂, S₃ corresponds to a specific optic sensor 12A,B,C included in the fiber 11. Further, each of the spectra is modelled as a Gaussian shaped curve C having a maximum at a central gravity wavelength λ_{g}. Due to external parameters, such as temperature or mechanical stress, the optical internal structure of the optic sensor may change, causing the Gaussian shaped curve C to shift along the wavelength axis. In the shown diagram, the second spectrum S₂ shifts from a first curve C₁ along a difference wavelength Δλ into a second curve C₂. The first curve C₁ has a first central frequency λ_{g1}, while the second curve C₂ has a second central frequency λ_{g2}. When interrogating the sensor with an interrogation signal at a selected wavelength lambdaₘₑₐₛ, the response signal Sᵣₑₛ corresponding with the first and the second curve C₁ , C₂ have different intensity values I₁, I₂. From the intensity difference, it is determined that the spectral curve C has shifted. Optionally, also the difference wavelength Δλ is estimated, so that the value of the external parameter(s) causing the wavelength shift in the sensor spectrum can be computed. It is noted that the spectral bandwidth of the interrogating signal is relatively small compared to the spectral resonance curve C of the sensors.

In a specific embodiment, the detection that the curve C has shifted can be sufficient for the purpose of determining a state of the sensor, e.g. if the sensors switches between two states, viz. a strained state and a non-strained state.

Preferably, the limited number of interrogation wavelengths for each optic sensor 12 is less than 10, less than 5 or less than 3. In a specific embodiment, only one interrogation wavelength for each optic sensor 12 is selected. By choosing only a limited number of interrogation wavelengths for each optic sensor, the interrogation process for each optic sensor is relatively short, so that the multiple number of optic sensors can be interrogated relatively fast. In this respect it is noted that programmable laser sources are known having very short switching times, in the order of circa 100 ns or even less, for switching between a first programmed wavelength and a second programmed wavelength. Applying such fast switching programmable laser sources renders the measurement cycle even faster. Intensity and wavelength variation due to the switching can be corrected by using the correction unit 15.

As an example, in case of N sensors, m interrogation wavelengths can be selected. Then, m x N interrogation signals will be sent by the laser source, and m x N response signals will be measured by the receiving device 28.

Advantageously, an interrogation wavelength is selected on a flank or side slope Slₗ, Sl₂ of a spectral curve S of an optic sensor 12. By selecting an interrogation wavelength λₘₑₐₛ on a slope of the spectral curve S, a shift of the curve S can be easily detected since the detected intensity of the response signal Sᵣₑₛ then also changes. In a preferred embodiment, an interrogation wavelength is selected at a setpoint where the slope of the curve S has a (local) maximum, enhancing the sensitivity of the detection process regarding a shift of the curve. Advantageously, local gradient information near or at the interrogation wavelength λₘₑₐₛ is used as a transfer function for determining whether the resonance spectrum has shifted, and, optionally, for estimating the wavelength offset.

Advantageously, a first interrogation wavelength is selected on a first flank of a spectral curve of an optic sensor and a second interrogation wavelength is selected on a second flank of the spectral curve, thereby improving the accurateness of the measurement and/or enabling monitoring of the resonance curve in more detail. In principle, the difference between the two response signals can be measured, e.g. for the purpose of intensity correction, not merely for correcting intensity variations in the laser source, but also in losses in the optic path between the interrogator and the sensor.

In a further preferred embodiment, a shift in the resonance spectrum S of the optic sensor 12 is tracked to monitor semi-static deviations or drifts of the spectrum curve. The process of tracking a resonance spectrum shift can e.g. be performed when a cycle of interrogation steps have finished, or after a number of cycles of interrogation steps have finished. Further, the tracking process can be performed using information of the interrogation process. Alternatively, the tracking process includes a separate interrogation process based a more dense set of interrogation wavelengths, e.g. a set of uniformly distributed interrogation wavelengths to scan the spectrum of all sensors 12. As an example, the number of interrogation wavelengths in the separate interrogation process may exceed the number of selected wavelengths for all sensors by a factor ten or more. Advantageously, the limited number of interrogation wavelengths is reselected if a resonance spectrum S of a corresponding optic sensor has shifted more than a specified wavelength interval, e.g. more than halve of the Gaussian pulse width, so that a relevant part of the resonance spectrum S is interrogated, maintaining the measurement process reliable and accurate.

Optionally, the interrogation step is periodically repeated, so that, in each cycle, the laser source 14 is operated at the sequence of the selected interrogation wavelengths λₘₑₐₛ. By repeating the interrogation cycle, the optic sensors can be monitored almost instantaneously, e.g. to obtain real time measurement data.

In a highly preferred embodiment according to the invention, the process is split in an initializing or scanning phase, and an interrogating phase using the selected interrogation wavelengths. During the scanning phase, a step of densely scanning is performed before the step of selecting the interrogation wavelengths. In the scanning step, a spectrum range including the resonance spectra of the multiple number of optic sensors is analyzed. The scanning information can be used for selecting the limited number of interrogation wavelengths and/or for determining flanks and/or local gradient information in spectral resonance curves of the optic sensors in order to acquire the transfer function. Here, the programmable laser source can be programmed to scan the broad wavelength domain at densely sampled, discrete wavelengths, with predefined step size, to determine and spectrally characterize the number of fiber optic sensors. The wavelength sampling step size is typically much smaller than the typical bandwidth of the fiber optic sensors. Then, the measured intensities are normalized with respect to the actual intensity of the laser source and the actual wavelength of the discrete wavelengths is measured by the wavelength tracking device 23. Further, the limited number of interrogation wavelengths per individual sensor is selected. The slope of the spectrum of each sensor can be determined in order to calculate the wavelength shift to intensity transfer function. As an example, a wavelength is selected at a setpoint where spectral curve reaches half of the maximum spectral peak value. Two neighboring interrogating wavelengths can be used to determine the slope of the spectral curve at the interrogation wavelength. Local gradient information can serve as a basis for determining whether a resonance spectrum of a sensor has shifted, and optionally how much.

In an exemplary embodiment, the sensors are interrogated with interrogation signals having the selected interrogation wavelength, preferably in a predetermined sequence. Any contribution of wavelength shift and intensity variation of the laser source to the intensity of the response signal at the pre-selected interrogation wavelength are corrected, preferably using information of the spectral curve slope. The difference in intensity of the response signal between different states of the respective sensors can be used to calculate the spectral shift of the sensor curve, which shift is indicative for an external physical parameter causing the change in the optical characteristic of the sensor, e.g. strain.

The correction unit 15 is arranged to correct the measurements during the scanning phase or during the interrogation phase using the selected interrogation wavelengths, or during both phases.

The interrogation unit can be used to measure physical parameters influencing the spectrum of the optic sensors, e.g. temperature, strain, pressure, chemical composition, moisture, electromagnetic field, vibration, acceleration and/or radiation.

Figure 4 shows a flow chart of an embodiment of the method according to the invention. The method is used for interrogating a multiple number of optic sensors. The method comprises a step of providing 110 a multiple number of optic sensors included in a single optic path and having spectrally separated resonance spectra, a step of providing 120 a single interrogation unit coupled to the single optic path, a step of selecting 130 a limited number of interrogation wavelengths for each optic sensor, a step of programming 140 a programmable laser source, included in the single interrogation unit, in a sequence of the selected interrogation wavelengths, a step of interrogating 150 the optic sensors by operating the laser source in the sequence of the selected interrogation wavelengths, and a step of performing 160 measurements on the programmable laser source output for correcting the interrogating step.

The method of interrogating a multiple number of optic sensors can be performed using dedicated hardware structures, such as FPGA and/or ASIC components. Otherwise, the method can also at least partially be performed using a computer program product comprising instructions for causing a processor of a computer system or a control unit to perform the above described steps of the method according to the invention, or at least the step of programming the programmable laser source and/or the step of interrogating the optic sensors by operating the laser source in the sequence of the selected interrogation wavelengths. However, it is noted that at least one step can be performed on a separate processor. A processor can be loaded with a specific software module. Dedicated software modules can be provided, e.g. from the Internet.

The invention is not restricted to the embodiments described herein. It will be understood that many variants are possible.

As an example, the fiber 11 can be implemented as another element or elements forming an optical path, e.g. using planar waveguide technology. In the optical path, the optic sensors are included. For the purpose of performing measurements, the interrogation unit is coupled to the optical path for interrogating the optic sensors.

It is further noted that the response signal can be detected near the laser source, as a reflection signal, or at the other end of the optic path, as a transmission signal.

Other such variants will be apparent for the person skilled in the art and are considered to fall within the scope of the invention as defined in the following claims.

## Claims

1. A method of interrogating a multiple number of optic sensors, comprising the steps of:
- providing a multiple number of optic sensors included in a single optic path and having spectrally separated resonance spectra;
- providing a single interrogation unit coupled to the single optic path;
- selecting a limited number of interrogation wavelengths for each optic sensor;
- programming a programmable laser source, included in the single interrogation unit, in a sequence of the selected interrogation wavelengths;
- interrogating the optic sensors by operating the laser source in the sequence of the selected interrogation wavelengths, and
- performing measurements on the programmable laser source output for correcting the interrogating step.

2. A method according to claim 1, further including a step of densely scanning, before the step of selecting, a spectrum range including the resonance spectra of the multiple number of optic sensors.

3. A method according to claim 2, wherein the scanning information is used for selecting the limited number of interrogation wavelengths and/or for determining flanks and/or local gradient information in spectral resonance curves of the optic sensors.

4. A method according to any of the preceding claims, further including a step of detecting a response signal generated by a optic sensor upon interrogation of the laser source, and a step of determining whether the resonance spectrum has shifted based on the detected response of the optic sensor.

5. A method according to claim 3 and 4, wherein local gradient information associated with a selected interrogation wavelength is used for determining a shift in the resonance spectrum.

6. A method according to any of the preceding claims, wherein an interrogation wavelength is selected on a flank of a spectral curve of an optic sensor, or wherein a first interrogation wavelength is selected on a first flank of a spectral curve of an optic sensor and a second interrogation wavelength is selected on a second flank of the spectral curve.

7. A method according to any of the preceding claims, wherein the limited number of interrogation wavelengths for each optic sensor is 1, or is less than 3, 5 or 10.

8. A method according to any of the preceding claims, including a step of tracking a resonance spectrum shift of an optic sensor.

9. A method according to any of claim 8, including a step of reselecting a limited number of interrogation wavelengths if a resonance spectrum of the corresponding optic sensor has shifted more than a specified wavelength interval.

10. A method according to any of the preceding claims, wherein the step of performing measurements on the programmable laser source output includes measuring intensity and/or the operating wavelength of the laser source output, wherein the step of measuring the operating wavelength of the laser source is preferably performed using a 3x3 interferometer with a proper optical path difference (OPD) matching.

11. A method according to any of the preceding claims, wherein the interrogation step is periodically repeated, and wherein, in each cycle, the laser source is operated at the sequence of the selected interrogation wavelengths.

12. A computer program product for interrogating a multiple number of optic sensors, the computer program product comprising computer readable code for causing a processor to perform the steps of:
- programming a programmable laser source, included in a single interrogation unit coupled to a single optic path including a multiple number of optic sensors having spectrally separated resonance spectra, in a sequence of a selected, limited number of interrogation wavelengths for each optic, and
- interrogating the optic sensors by operating the laser source in the sequence of the selected interrogation wavelengths.

13. An interrogation unit for interrogating a multiple number of optic sensors included in a single optic path and having spectrally separated resonance spectra, the unit comprising a programmable laser source operable in a wavelength range covering the spectra of the optic sensors, and a controlling device for controlling the programmable laser source, such that the optic sensors are interrogated with a sequence of wavelengths composed of a limited number of interrogation wavelengths for each optic sensor, the interrogation unit further comprising a correction unit for performing measurements on the programmable laser source output for correcting the interrogating step.

14. An interrogation unit according to claim 13, wherein the programmable laser source is a Sample Grating Distributed Bragg Reflector (SG-DBR) laser.

15. An interrogation unit according to claim 13 or 14, wherein the optic sensor is a Fiber Bragg Grating, a ring resonator, or a Fabry Perot filter.
